# EUROPÄISCHE PATENTSCHRIFT

(11) **EP 3 253 985 B1**
(45) Veröffentlichungstag und Bekanntmachung des Hinweises auf die Patenterteilung: **15.01.2020**
(21) Anmeldenummer: 16706791.7
(22) Anmeldetag: 01.02.2016
(51) Int. Cl.: F16D 65/18, F16D 65/095

(54) **SCHEIBENBREMSE FÜR EIN NUTZFAHRZEUGRAD**
DISK BRAKE FOR A UTILITY-VEHICLE WHEEL
FREIN À DISQUE POUR VÉHICULE UTILITAIRE

(30) Priorität: 02.02.2015 DE 102015101468
(43) Veröffentlichungstag der Anmeldung: 13.12.2017
(73) Patentinhaber: BPW Bergische Achsen KG, 51674 Wiehl (DE)
(72) Erfinder: ABT, Christian, 51643 Gummersbach (DE); PEHLE, Michael, 51371 Leverkusen (DE); GOYKE, Georg, 51588 Nümbrecht (DE)
(74) Vertreter: Bungartz Christophersen Partnerschaft mbB Patentanwälte
(86) Internationale Anmeldenummer: PCT/DE2016/100039
(87) Internationale Veröffentlichungsnummer: WO 2016/124174

(56) Entgegenhaltungen:
- WO-A1-2014/102560
- DE-A1- 19 525 722

## Beschreibung

Die Erfindung betrifft eine vorzugsweise druckluftbetriebene Scheibenbremse für ein Nutzfahrzeugrad mit
- einem eine Bremsscheibe, die auf der Raddrehachse angeordnet ist, übergreifenden Bremssattel,
- einer auf der einen Seite der Bremsscheibe in dem Bremssattel angeordneten, durch ein Kraftglied und vorzugsweise einen Druckluftzylinder betätigbaren Zuspanneinrichtung,
- Bremsbelägen zu beiden Seiten der Bremsscheibe, wobei zumindest der zuspannseitige Bremsbelag in einem Belagschacht mit ersten und zweiten Stützflächen angeordnet ist, die einen in Umfangsrichtung gleichen Abstand zu einer Belagschacht-Mittellinie aufweisen, und gegen die der Bremsbelag mit seinen in Umfangsrichtung weisenden Rändern anliegt,
- einem Bremshebel, der Bestandteil der Zuspanneinrichtung ist und sich zusammensetzt aus einem Hebelarm, gegen den das Kraftglied abgestützt ist, und einer mit dem Hebelarm verbundenen Zuspannwelle, die innerhalb des Bremssattels auf einer Schwenkachse gelagert und gegen ein gegen den zuspannseitigen Bremsbelag arbeitendes Druckstück drehbeweglich abgestützt ist.

Scheibenbremsen für Nutzfahrzeuge mit diesen Merkmalen sind aus der EP 0 614 024 B1 und der DE 42 30 005 A1 bekannt. In einem die Bremsscheibe und die Bremsbeläge übergreifenden Bremssattel befindet sich eine durch ein außen angeflanschtes Kraftglied, z. B. einen Druckluftzylinder, betätigbare Zuspanneinrichtung. Zentraler Bestandteil der Zuspanneinrichtung ist ein in dem Bremssattel schwenkbar gelagerter Bremshebel. Dieser setzt sich zusammen aus einem Hebelarm, gegen den das Kraftglied abgestützt ist, und einer Zuspannwelle. Die Zuspannwelle ist einerseits drehbeweglich gegen das Bremssattelgehäuse, und andererseits drehbeweglich gegen ein in dem Bremssattel längsbeweglich angeordnetes Druckstück abgestützt, welches mittel- oder unmittelbar gegen den inneren, zuspannseitigen Bremsbelag arbeitet.

In der Regel sind solche Scheibenbremsen in Umfangsrichtung symmetrisch gestaltet, und insbesondere erfolgt auch die Druckbeaufschlagung der beiden Bremsbeläge und insbesondere des inneren, zuspannseitigen Bremsbelags symmetrisch in Bezug auf die Umfangsrichtung. Die mit solchen Bremsen ausgestatteten Fahrzeuge bewegen sich im täglichen Fahrbetrieb nahezu ausschließlich in die eine Fahrtrichtung, wohingegen die andere, üblicherweise bei Rückwärtsfahrt eingenommene Fahrtrichtung sehr selten vorkommt. Der Bremssattel sollte aber auch bei stets gleichbleibender Laufrichtung die Bremsbeläge möglichst gleichmäßig anpressen. Denn nur in diesem Fall ergibt sich überall am Bremsbelag die gleiche Oberflächentemperatur. Örtliche Pressungserhöhungen am Bremsbelag führen hingegen zu Temperatursteigerungen, verbunden mit einer Reduzierung der Leistungsfähigkeit der Bremse sowie einem erhöhten Verschleiß am Bremsbelag.

Das Problem des geometrisch bedingten Schrägverschleißes bei Scheibenbremsen (sogenannter Umfangsschrägverschleiß) ist daher bekannt. So wird z. B. bei der Einstempel-Scheibenbremse nach der DE 42 30 005 A1 als Ausgleichsmaßnahme vorgeschlagen, die auf den inneren Bremsbelag wirkende Druckübertragungsfläche leicht schräg bzw. keilförmig zu gestalten und so, in Umfangsrichtung betrachtet, zu einer Asymmetrie der Druckverteilung zu kommen.

Auf dem Gebiet hydraulisch betätigter Scheibenbremsen, bei denen das Kraftglied üblicherweise ein zylindrisch gestalteter Hydraulikkolben ist, wird bisweilen der Weg beschritten, den Hydraulikkolben in tangentialer Richtung versetzt in dem Bremssattel anzuordnen. Der von dem Kolben ausgeübte Bremsdruck trifft dann nicht auf die geometrische Mitte des Bremsbelags, sondern schwerpunktmäßig auf einen geometrischen Ort, der in Umfangsrichtung der Bremsscheibe leicht vorversetzt ist. Hydraulisch betätigte Scheibenbremsen mit diesen Merkmalen sind z. B. aus der DE 35 40 810 C1 oder der US 4,533,025 bekannt. Die Grundidee, den die Zuspannkraft übertragenden Kolben einfach in tangentialer Richtung versetzt anzuordnen, lässt sich jedoch nicht ohne Weiteres auf eine druckluftbetriebene Scheibenbremse mit einem verschwenkbar in dem Bremssattelgehäuse angeordneten Bremshebel übertragen.

Dokument WO 2014 102 560 A1 offenbart eine druckluftbetriebene Scheibenbremse für ein Nutzfahrzeugrad.

Ziel der Erfindung sind daher Maßnahmen, um vor allem bei einer druckluftbetriebenen Scheibenbremse der eingangs genannten Art zu einem Ausgleich des geometrisch bedingten Schrägverschleißes der Bremsbeläge zu gelangen.

Hierzu wird eine Scheibenbremse mit den Merkmalen des Patentanspruchs 1 vorgeschlagen. Bei der so ausgebildeten Scheibenbremse ist die Schwenkachse der Zuspannwelle schräg zu der Haupterstreckung des Belagschachts angeordnet, also zu einer solchen Linie, welche sich rechtwinklig zu der Belagschacht-Mittellinie und zwischen den beiden Stützflächen erstreckt. Die Zuspannwelle gelangt auf diese Weise in Bezug auf den inneren, d. h. zuspannseitigen Bremsbelag in eine leicht verschwenkte Anordnung. Dies führt zu einer Reduzierung des geometrisch bedingten Schrägverschleißes (Umfangsschrägverschleißes) der Scheibenbremse, und zwar nicht nur an dem zuspannseitigen Bremsbelag, sondern auch an dem anderen, vorzugsweise identisch gestalteten Bremsbelag. Es wird eine verschleißoptimierte Bauart erzielt, bei der die Haltbarkeit der Bremsbeläge deutlich höher ist als bei einer konventionellen, zentral im Bereich der Mitte der Bremsbeläge erfolgenden Zuspannung.

Erfindungsgemäß ist die Schrägstellung der Zuspannwelle so, dass eine - gedachte - Querachse, die zu der Mitte der Länge der Zuspannwelle rechtwinklig verläuft, genau die Raddrehachse schneidet. Die Zuspannwelle ist also, verglichen mit dem Belagschacht, um die Raddrehachse herum verschwenkt. Ebenso können auch der Hebelarm und die Traverse, gegen die die Zuspannwelle abgestützt ist, im gleichen Winkel verschwenkt sein. Vorzugsweise sind auch alle anderen Komponenten der Bremszuspannung einschließlich des Druckluftzylinders und seiner Verschraubung mit dem Bremssattel um den gleichen Winkel verschwenkt.

Mit einer weiteren Ausgestaltung wird vorgeschlagen, dass die Belagschacht-Mittellinie die Raddrehachse schneidet.

Gemäß einer weiteren Ausgestaltung ist die Schwenkachse der Zuspannwelle unter einem Winkel zwischen 2,5° und 7° zu der Haupterstreckung des Belagschachts angeordnet. Eine solche Verschwenkung der Zuspannwelle hat sich als optimal zur Reduzierung des Schrägverschleißes an den Bremsbelägen herausgestellt.

Mit einer weiteren Ausgestaltung wird vorgeschlagen, dass sich die zwei Stützflächen des Belagschachts parallel zueinander erstrecken, und dass die Schwenkachse schräg zu der auf den Stützflächen senkrecht stehenden Flächennormalen angeordnet ist.

Ferner wird vorgeschlagen, dass sich der Hebelarm des Bremshebels rechtwinklig zu der Schwenkachse erstreckt.

Im Folgenden ist die Erfindung anhand von Ausführungsbeispielen unter Bezugnahme auf die Zeichnungen und die darin wiedergegebenen Einzelheiten näher erläutert. Es zeigen:
- Fig. 1: eine Draufsicht auf eine durch Druckluft betätigbare Scheibenbremse, wie sie insbesondere als Nutzfahrzeugbremse zum Einsatz kommen kann;
- Fig. 2: eine Ansicht in Richtung der Raddrehachse auf die Scheibenbremse, wobei zusätzlich ein Druckluftzylinder dargestellt ist, welcher das Kraftglied der Scheibenbremse bildet;
- Fig. 3: eine Prinzipdarstellung der Anordnung einer in dem Bremssattelgehäuse der Scheibenbremse angeordneten Zuspannwelle in Bezug auf einen Belagschacht, in dem der eine der beiden Bremsbeläge der Scheibenbremse aufgenommen ist, und
- Fig. 4: in einer zweiten Ausführungsform eine Prinzipdarstellung der Anordnung einer in dem Bremssattelgehäuse der Scheibenbremse angeordneten Zuspannwelle in Bezug auf einen Belagschacht, in dem der eine der beiden Bremsbeläge der Scheibenbremse aufgenommen ist.

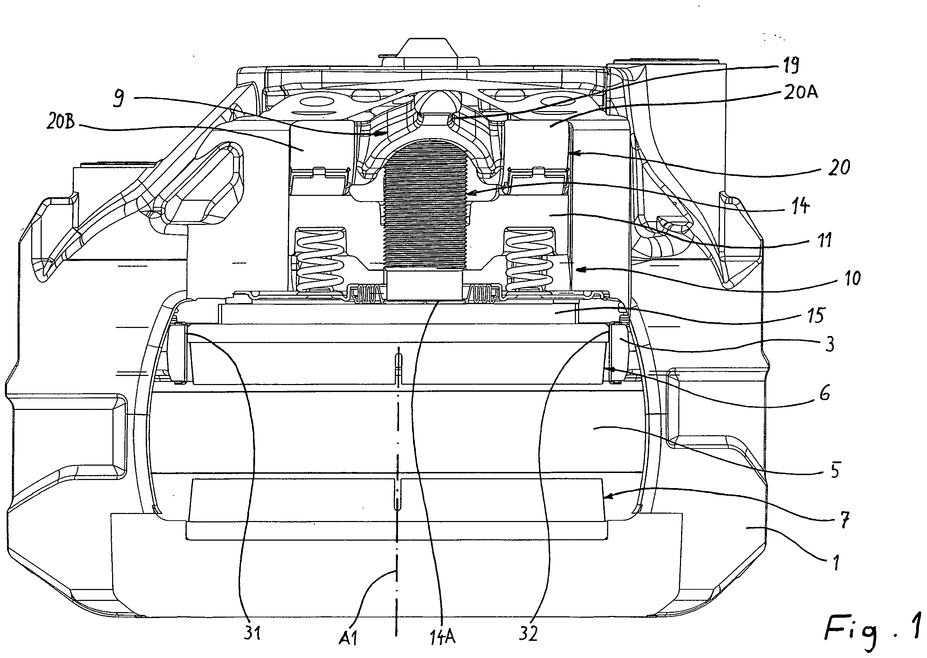

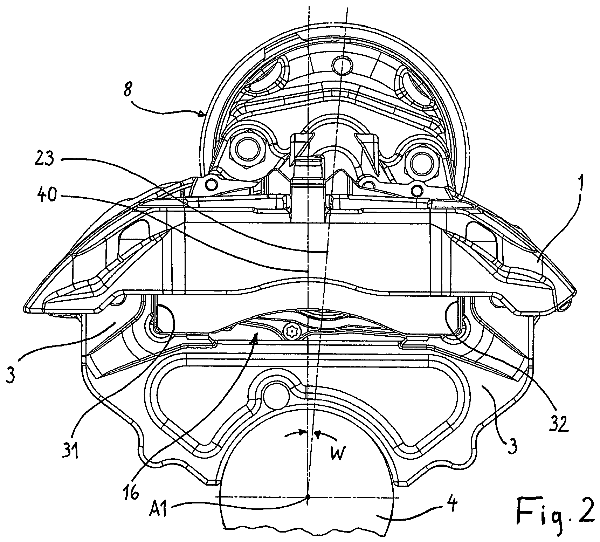

Auf den Zeichnungen dargestellt ist eine Scheibenbremse, wie sie insbesondere als druckluftbetätigte Nutzfahrzeugbremse verbaut wird. Bestandteile der Scheibenbremse sind unter anderem ein Bremssattel 1, eine von dem Bremssattel 1 übergriffene Bremsscheibe 5 sowie Bremsbeläge 6, 7 zu beiden Seiten der Bremsscheibe 5. Die Bremsscheibe 5 ist in Fig. 1 gestrichelt wiedergegeben, in Fig. 2 fehlt sie.

Die Scheibenbremse arbeitet mit einseitiger Zuspannung, d. h. die Zuspannkraft einer im Folgenden noch näher beschriebenen Zuspanneinrichtung wird auf den von fahrzeuginnen her gegen die Bremsscheibe 5 arbeitenden Bremsbelag 6 unmittelbar übertragen, wohingegen der andere Bremsbelag 7 durch die entstehende Reaktionskraft von dem Bremssattel 1 gegen die Bremsscheibe 5 gezogen wird. Die Bauart ist daher die einer Schwimmsattelbremse, bei der die Bremsscheibe 5 in Richtung der Raddrehachse A1 unbeweglich ist, hingegen der Bremssattel 1 beweglich ist, indem der Bremssattel auf einem Bremsträger 3, der hier an einem Achsrohr 4 befestigt ist, in Richtung der Raddrehachse A1 verschieblich angeordnet ist.

Die Hauptbestandteile der Zuspanneinrichtung, deren Aufgabe vor allem die Verstärkung der durch ein Kraftglied 8 erzeugten Bremskräfte ist, sind ein innerhalb des Bremssattels 1 schwenkbar angeordneter Bremshebel 9 und ein gegen den inneren Bremsbelag 6 der Scheibenbremse arbeitendes Druckstück 10. Das Druckstück 10 ist mehrteilig aufgebaut. Bei der hier beschriebenen Scheibenbremse setzt es sich aus einer Traverse 11, einer verschraubbaren Spindel 14 und einer Druckplatte 15 zusammen. Bestandteil des Druckstücks 10 ist unter anderem die sich über die Breite des Bremshebels 9 erstreckende Traverse 11, in der die in der Traverse 11 verschraubbare Spindel 14 sitzt. Die hierzu mit einem Außengewinde versehene Spindel 14 ist ihrerseits gegen die der Druckverteilung dienende, stabile Druckplatte 15 abgestützt, die ihrerseits gegen den zuspannseitigen Bremsbelag 6 abgestützt ist.

Die Scheibenbremse weist die Bauart einer Einstempel-Bremse auf, da die gesamte Zuspannkraft über nur eine Spindel 14 übertragen wird, und ein paralleler Kraftflussweg, z. B. über eine zweite Spindel, fehlt. Da die Spindel 14 für die Zwecke der Nachstellung der Bremse drehbar ist, ist ihre der Bremsscheibe zugewandte Stirnseite 14A kreisrund. Diese Stirnseite 14A arbeitet entweder, wie in Fig. 1 illustriert, gegen die den Zuspanndruck besonders gut auf die Gesamtfläche des Bremsbelags 6 verteilende Druckplatte 15. Oder aber die Stirnseite 14A stützt sich, unter Verzicht auf die Druckplatte 15, gegen den Bremsbelag 6 ab, und dessen Rückenplatte übernimmt die Aufgabe der Druckverteilung.

Der Bremshebel 9 setzt sich einstückig aus einem Hebelarm 19 und einer Zuspannwelle 20 zusammen. Die Zuspannwelle 20 ist an ihrer Rückseite von innen gegen den Bremssattel 1 abgestützt. Diese Abstützung erfolgt über zwei Drehlager. In die andere Richtung, also zu dem Bremsbelag 6 und der Bremsscheibe 5 hin, ist die Zuspannwelle 20 über zwei weitere Drehlager gegen die in diesem Bereich mit Schalenlagern versehene Traverse 11 abgestützt.

Die Zuspannwelle 20 ist exzentrisch gelagert. Denn die rückwärtigen, gegen den Bremssattel 1 abgestützten Schalenlager definieren ein Drehlager, das im Vergleich zu dem Drehlager der nach vorne gegen die Traverse 10 abgestützten Schalenlager in der Höhe versetzt ist. Die zwei Drehlager erstrecken sich aber exakt parallel zueinander, und werden daher im Folgenden gemeinsam unter dem Begriff "Schwenkachse A" zusammengefasst. Aufgrund der Exzentrizität kommt es beim Schwenken der Zuspannwelle 20 zu einer Vorwärtsbewegung des Druckstücks 10 in Richtung zu der Bremsscheibe 5, so dass die Bremse zugespannt wird.

Zum Verdrehen der Zuspannwelle 20 um die oben definierte Schwenkachse A dient der Hebelarm 19. Dessen Längsachse 23 erstreckt sich rechtwinklig zu der Schwenkachse A. Der Hebelarm 19 ist an seinem äußeren Ende mit einer Abstützung versehen. Diese definiert einen Abstützpunkt, gegen den das Kraftglied 8 der Scheibenbremse arbeitet, also hier der außen an dem Bremssattelgehäuse angeflanschte pneumatische Bremszylinder.

Fig. 1 lässt eine Bauart der Zuspanneinrichtung erkennen, bei der der Bremshebel 9 insgesamt gabelförmig gestaltet ist und sich, ausgehend von dem auf der Längsachse 23 angeordneten Hebelarm 19, in zwei Schenkel aufteilt. Der eine Schenkel ist mit einem ersten Abschnitt 20A, und der zweite Schenkel ist mit einem zweiten Abschnitt 20B der Zuspannwelle 20 verbunden. Auf diese Weise weist der Bremshebel 9 zwischen den beiden Abschnitten 20A, 20B in Verlängerung des Hebelarms 19 einen Freiraum auf, der Platz für die in der Traverse 11 verschraubbare Spindel 14 bietet.

Die als zentrales Druckstück der Zuspanneinrichtung dienende Spindel 14 ist innen mit einem Hohlraum versehen sein, in welchem sich eine Nachstelleinrichtung der Scheibenbremse befindet. Bestandteile einer solchen Nachstelleinrichtung sind üblicherweise ein Antriebselement, ein das Lüftspiel der Scheibenbremse verringerndes Abtriebselement und, im Bewegungsweg zwischen Antriebselement und Abtriebselement, eine Einwegekupplung und ein Überlastglied. Diese Bestandteile der Nachstelleinrichtung sind auf einer gemeinsamen Nachstellachse angeordnet, die mit der Längsachse der Spindel 14 zusammenfällt, und sich senkrecht zur Ebene der Bremsscheibe 5 erstreckt. Die Schraub-und Längsachse der Spindel 14 erstreckt sich rechtwinklig zu der Schwenkachse A der Zuspannwelle 20.

Die beiden Bremsbeläge 6, 7 sind jeweils in Belagschächten angeordnet, wobei die Belagschächte dazu ausgebildet sind, die Bremsbeläge parallel zu der Raddrehachse A1 zu führen und zur Aufnahme der Bremskräfte in Umfangsrichtung abzustützen. Dabei besteht grundsätzlich zwar die Möglichkeit, die Belagschächte entweder an dem Bremsträger 3 oder am Bremssattel 1 auszubilden. Bei der hier beschriebenen Scheibenbremse ist der Belagschacht 16 für den inneren Bremsbelag 6 am Bremsträger 3, und der Belagschacht für den äußeren Bremsbelag 7 an dem Bremssattel 1 der Scheibenbremse ausgebildet.

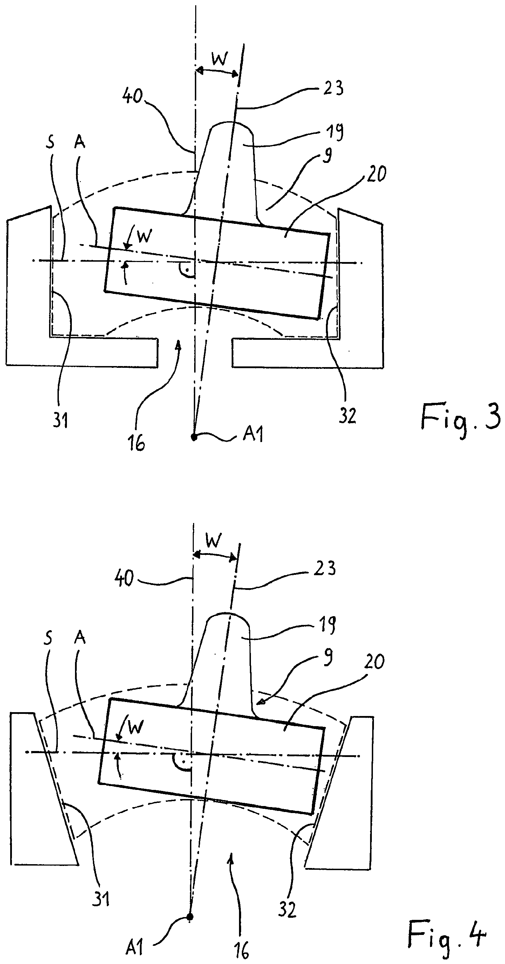

Fig. 3 zeigt in prinzipieller Darstellung die geometrische Anordnung des Bremshebels 9 und insbesondere der Zuspannwelle 20 in Bezug auf den inneren Belagschacht 16 sowie den darin sitzenden, zuspannseitigen Bremsbelag 6. Der Belagschacht 16 ist im Wesentlichen rechteckig gestaltet und weist eine erste Stützfläche 31 und eine zweite Stützfläche 32 auf, gegen die der Bremsbelag 6 mit seinen in Umfangsrichtung weisenden Rändern anliegt, um so den Großteil der Bremsmomente auf den Belagschacht 16 und damit auf den Bremsträger 3 abzuführen. Die geometrischen Verhältnisse sind dergestalt, dass die beiden Stützflächen 31, 32 in Umfangsrichtung jeweils denselben Abstand zu der Belagschacht-Mittellinie 40 aufweisen, wobei diese Belagschacht-Mittellinie 40 die Raddrehachse A1 schneidet.

Zur Reduzierung des Schrägverschleißes an dem Bremsbelag ist die Schwenkachse A der Zuspannwelle 20 schräg zu der Haupterstreckung S des Belagschachts 16 angeordnet, also schräg zu einer solchen Linie, welche sich rechtwinklig zu der Belagschacht-Mittellinie 40 zwischen den beiden Stützflächen 31, 32 erstreckt. Bei Beachtung dieser geometrischen Verhältnisse gelangt die Zuspannwelle 20 in Bezug auf den inneren zuspannseitigen inneren Bremsbelag 6 in eine leicht verschwenkte Anordnung.

Diese Bauart führt zu einer Reduzierung des geometrisch bedingten Schrägverschleißes (Umfangsschrägverschleißes) der Scheibenbremse, und zwar nicht nur an dem zuspannseitigen Bremsbelag 6, sondern auch an dem anderen, identisch gestalteten Bremsbelag 7. Es wird eine verschleißoptimierte Bauart erzielt, bei der die Haltbarkeit der Bremsbeläge deutlich höher ist als bei einer konventionellen, zentral im Bereich der Mitte der Bremsbeläge erfolgenden Zuspannung. Der Winkel W, unter dem die Schwenkachse A der Zuspannwelle schräg zu der Haupterstreckung S des Belagschachts 16 angeordnet ist, sollte zwischen 2,5° und 7°, vorzugsweise 3,5° bis 6° betragen.

Außerdem ist die Schrägstellung der Zuspannwelle 20 so, dass eine - gedachte - Querachse 23, welche zu der Mitte der Länge der Zuspannwelle 20 rechtwinklig verläuft, genau die Raddrehachse A1 schneidet. Die Zuspannwelle 20 ist also, verglichen mit dem Belagschacht 16, um die Raddrehachse A1 herum um den Winkel W verschwenkt, und die Querachse 23 erstreckt sich unter dem Winkel W zu der Belagschacht-Mittellinie 40.

Auch der Hebelarm 19 und die Traverse 11, gegen die die Zuspannwelle abgestützt ist, können um diesen Winkel W verschwenkt sein.

Vorzugsweise sind auch alle anderen Komponenten der Bremszuspannung einschließlich des Druckluftzylinders 8 und seiner Verschraubung mit dem Bremssattel um den Winkel W verschwenkt.

Die zwei an dem Belagschacht 16 ausgebildeten Stützflächen 31, 32 erstrecken sich bei Fig. 3 parallel zueinander, und die Schwenkachse A ist schräg zu den auf den Stützflächen 31, 32 senkrecht stehenden Flächennormalen angeordnet.

Fig. 4 zeigt, ebenfalls in stark prinzipieller Darstellung, eine abgewandelte Ausführungsform. Bei dieser ist der Belagschacht 16 für den Bremsbelag 6 nicht rechteckig, sondern die Stützflächen 31, 32 des Belagschachts 16 verlaufen schräg und nicht parallel zueinander. Entsprechend sind die im Kontakt mit den Stützflächen 31, 32 stehenden, die Bremsmomente abführenden Ränder des Bremsbelags 6 gestaltet.

Auch bei der Ausführungsform nach Fig. 4 ist die Schwenkachse A der Zuspannwelle 20 schräg unter einem Winkel W zwischen 2,5° und 7° zu jener Haupterstreckung S angeordnet, welche sich rechtwinklig zu der Belagschacht-Mittellinie 40 und zwischen den beiden Stützflächen 31, 32 erstreckt.

Der zweite, d. h. der auf der abgewandten Seite der Bremsscheibe 5 angeordnete Belagschacht für den Bremsbelag 7 liegt dem ersten Belagschacht 16 genau gegenüber, d. h. seine Belagschacht-Mittellinie 40 schneidet ebenfalls die Raddrehachse A1, und er ist nicht in Umfangsrichtung versetzt zu dem ersten Belagschacht 16 angeordnet. Der zweite Belagschacht hat dieselben Maße, um so einen Bremsbelag 7 mit zu dem Bremsbelag 6 identischem Außenprofil aufnehmen zu können. Beide Bremsbeläge 6, 7 sind daher identisch, und somit austauschbar.

### Bezugszeichenliste

- 1: Bremssattel
- 3: Bremsträger
- 4: Achsrohr
- 5: Bremsscheibe
- 6: Bremsbelag
- 7: Bremsbelag
- 8: Kraftglied, Druckluftzylinder
- 9: Bremshebel
- 10: Druckstück
- 11: Traverse
- 14: Spindel
- 14A: Stirnseite
- 15: Druckplatte
- 16: Belagschacht
- 19: Hebelarm
- 20: Zuspannwelle
- 20A: Abschnitt der Zuspannwelle
- 20B: Abschnitt der Zuspannwelle
- 21: Stützfläche
- 23: Querachse, Längsachse des Hebelarms
- 31: Stützfläche
- 32: Stützfläche
- 40: Belagschacht-Mittellinie

- A: Schwenkachse
- A1: Raddrehachse
- S: Haupterstreckung des Belagschachts
- W: Winkel

## Patentansprüche

1. Scheibenbremse, vorzugsweise druckluftbetrieben, für ein Nutzfahrzeugrad, mit
- einem eine Bremsscheibe (5), die auf der Raddrehachse (A1) angeordnet ist, übergreifenden Bremssattel (1),
- einer auf der einen Seite der Bremsscheibe (5) in dem Bremssattel (1) angeordneten, durch ein Kraftglied (8) und vorzugsweise einen Druckluftzylinder betätigbaren Zuspanneinrichtung,
- Bremsbelägen (6, 7) zu beiden Seiten der Bremsscheibe (5), wobei zumindest der zuspannseitige Bremsbelag (6) in einem Belagschacht mit ersten und zweiten Stützflächen (31, 32) angeordnet ist, die einen in Umfangsrichtung gleichen Abstand zu einer Belagschacht-Mittellinie (40) aufweisen, und gegen die der Bremsbelag (6) mit seinen in Umfangsrichtung weisenden Rändern anliegt,
- einem Bremshebel (9), der Bestandteil der Zuspanneinrichtung ist und sich zusammensetzt aus einem Hebelarm (19), gegen den das Kraftglied (8) abgestützt ist, und einer mit dem Hebelarm (19) verbundenen Zuspannwelle (20), die innerhalb des Bremssattels (1) auf einer Schwenkachse (A) gelagert und gegen ein gegen den zuspannseitigen Bremsbelag (6) arbeitendes, ein- oder mehrteiliges Druckstück (10) drehbeweglich abgestützt ist, wobei die Schwenkachse (A) der Zuspannwelle (20) schräg zu jener Belagschacht-Haupterstreckung (S) angeordnet ist, welche sich rechtwinklig zu der Belagschacht-Mittellinie (40) zwischen den beiden Stützflächen (31, 32) erstreckt, **dadurch gekennzeichnet, dass** eine gedachte Querachse (23), die zu der Mitte der Länge der Zuspannwelle (20) rechtwinklig verläuft, die Raddrehachse (A1) schneidet.

2. Scheibenbremse nach Anspruch 1, **dadurch gekennzeichnet, dass** die Belagschacht-Mittellinie (40) die Raddrehachse (A1) schneidet.

3. Scheibenbremse nach Anspruch 1 oder 2, **dadurch gekennzeichnet, dass** die Schwenkachse (A) unter einem Winkel (W) zwischen 2,5° und 7° zu der Belagschacht-Haupterstreckung (S) angeordnet ist.

4. Scheibenbremse nach einem der Ansprüche 1 - 3, **dadurch gekennzeichnet, dass** auch der Hebelarm (19) und die Traverse (11), gegen die die Zuspannwelle (20) abgestützt ist, um den Winkel (W) verschwenkt angeordnet sind.

5. Scheibenbremse nach einem der vorangehenden Ansprüche, **dadurch gekennzeichnet, dass** sich die Längsachse (23) des Hebelarms (19) des Bremshebels (9) rechtwinklig zu der Schwenkachse (A) erstreckt.

6. Scheibenbremse nach einem der vorangehenden Ansprüche, **dadurch gekennzeichnet, dass** die Belagschächte der beiden Bremsbeläge (6, 7) einander exakt gegenüberliegend und ohne gegenseitigen Versatz in Umfangsrichtung angeordnet sind.

7. Scheibenbremse nach Anspruch 6, **dadurch gekennzeichnet, dass** die beiden Bremsbeläge (6, 7) identisch gestaltet sind.

8. Scheibenbremse nach einem der vorangehenden Ansprüche, **dadurch gekennzeichnet, dass** Bestandteil des mehrteiligen Druckstücks (10) eine um ihre Längsachse verdrehbare Spindel (14) ist, und dass die Spindel (14), der Bremsscheibe zugewandt, eine kreisrunde Stirnseite (14A) als Druckübertragungsfläche aufweist.

9. Scheibenbremse nach Anspruch 8, **gekennzeichnet durch** eine der Druckverteilung dienende Druckplatte (15) zwischen der Stirnseite (14A) der Spindel (14) und dem Bremsbelag (6).

## Claims

1. Disk brake, preferably operated by compressed air, for a utility-vehicle wheel, with
- a brake caliper (1) reaching around a brake disk (5) which is arranged on the wheel rotational axis (A1),
- an application device which is arranged in the brake caliper (1) on the one side of the brake disk (5) and can be actuated by means of a force member (8) and preferably a compressed-air cylinder,
- brake pads (6, 7) on both sides of the brake disk (5), wherein at least the application-side brake pad (6) is arranged in a pad duct having first and second supporting surfaces (31, 32) which have the same distance from a pad duct center line (40) in the circumferential direction, and against which the brake pad (6) lies with its edges pointing in the circumferential direction,
- a brake lever (9) which is part of the application device and is composed of a lever arm (19) supporting the force member (8), and an application shaft (20) which is connected to the lever arm (19) and mounted inside the brake caliper (1) on a pivot axis (A) and rests in a rotationally movable manner against a one- or multi-piece pressure piece (10) working against the application-side brake pad (6),
wherein the pivot axis (A) of the application shaft (20) is arranged at an angle to the main pad duct extension (S) which extends between the two supporting surfaces (31, 32) at a right angle to the pad duct center line (40), **characterized in that** a theoretical transverse axis (23), running at a right angle to the center of the length of the application shaft (20), intersects the wheel rotational axis (A1).

2. Disk brake according to Claim 1, **characterized in that** the pad duct center line (40) intersects the wheel rotational axis (A1).

3. Disk brake according to Claim 1 or 2, **characterized in that** the pivot axis (A) is arranged at an angle (W) of between 2.5° and 7° to the main pad duct extension (S).

4. Disk brake according to any of Claims 1 - 3, **characterized in that** the lever arm (19) and the crosspiece (11) which supports the application shaft (20) are also arranged tilted by the angle (W).

5. Disk brake according to any of the preceding claims, **characterized in that** the longitudinal axis (23) of the lever arm (19) of the brake lever (9) extends at a right angle to the pivot axis (A).

6. Disk brake according to any of the preceding claims, **characterized in that** the pad ducts of the two brake pads (6, 7) are arranged precisely opposite each other with no mutual offset in the circumferential direction.

7. Disk brake according to Claim 6, **characterized in that** the two brake pads (6, 7) are identical.

8. Disk brake according to any of the preceding claims, **characterized in that** part of the multipiece pressure piece (10) is a spindle (14) rotatable about its longitudinal axis, and that the spindle (14) facing the brake disk has a circular end face (14A) as a pressure transfer face.

9. Disk brake according to Claim 8, **characterized by** a pressure plate (15) serving for pressure distribution between the end face (14A) of the spindle (14) and the brake pad (6).

## Revendications

1. Frein à disque, de préférence actionné par air comprimé, pour une roue de véhicule utilitaire, avec
- un étrier de frein (1) enjambant un frein à disque (5) qui est disposé sur l'axe de rotation de roue (A1),
- un dispositif de serrage, disposé sur un côté du frein à disque (5) dans l'étrier de frein (1) et pouvant être actionné par un organe de force (8) et de préférence un cylindre pneumatique,
- des garnitures de frein (6, 7) des deux côtés du frein à disque (5), au moins la garniture de frein (6) côté serrage étant disposée dans un logement de garniture avec des premières et deuxièmes surfaces d'appui (31, 32) qui présentent, dans la direction circonférentielle, un écart égal à une ligne médiane de logement de garniture (40) et contre lesquelles la garniture de frein (6) est placée avec ses bords dirigés dans la direction circonférentielle,
- un levier de frein (9), qui fait partie du dispositif de serrage et se compose d'un bras de levier (19) contre lequel l'organe de force (8) est appuyé, et un arbre de serrage (20), raccordé au bras de levier (19), qui est supporté à l'intérieur de l'étrier de frein (1) sur un axe de pivotement (A) et qui s'appuie de façon mobile en rotation contre une pièce de pression (10) en une ou plusieurs parties qui travaille contre la garniture de frein (6) côté serrage, l'axe de pivotement (A) de l'arbre de serrage (20) étant disposé obliquement par rapport à l'étendue principale de logement de garniture (S) qui s'étend à angle droit par rapport à la ligne médiane de logement de garniture (40) entre les deux surfaces d'appui (31, 32), **caractérisé en ce**
**qu'**un axe transversal (23) imaginaire, qui est placé à angle droit par rapport au milieu de la longueur de l'arbre de serrage (20), coupe l'axe de rotation de roue (A1).

2. Frein à disque selon la revendication 1, **caractérisé en ce que** la ligne médiane de logement de garniture (40) coupe l'axe de rotation de roue (A1).

3. Frein à disque selon la revendication 1 ou 2, **caractérisé en ce que** l'axe de pivotement (A) est disposé en formant un angle (W) entre 2,5° et 7° avec l'étendue principale de logement de garniture (S).

4. Frein à disque selon l'une des revendications 1 - 3, **caractérisé en ce que** le bras de levier (19) et la traverse (11) contre lesquels l'arbre de serrage (20) est appuyé sont également disposés de façon pivotée selon l'angle (W).

5. Frein à disque selon l'une des revendications précédentes, **caractérisé en ce que** l'axe longitudinal (23) du bras de levier (19) du levier de frein (9) s'étend à angle droit par rapport à l'axe de pivotement (A).

6. Frein à disque selon l'une des revendications précédentes, **caractérisé en ce que** les logements de garniture des deux garnitures de frein (6, 7) sont disposés exactement en face l'un de l'autre et sans décalage mutuel dans la direction circonférentielle.

7. Frein à disque selon la revendication 6, **caractérisé en ce que** les deux garnitures de frein (6, 7) sont constituées de façon identique.

8. Frein à disque selon l'une des revendications précédentes, **caractérisé en ce qu'**une broche (14) rotative autour de son axe longitudinal fait partie de la pièce de pression (10) en plusieurs parties, et **en ce que** la broche (14), tournée vers le frein à disque, comporte un côté frontal (14A) circulaire en tant que surface de transmission de pression.

9. Frein à disque selon la revendication 8, **caractérisé par** une plaque de pression (15), servant à la répartition de pression, entre le côté frontal (14A) de la broche (14) et la garniture de frein (6).
